# FASCICULE DE BREVET EUROPEEN

(11) **EP 1 748 179 B1**
(45) Date de publication et mention de la délivrance du brevet: **02.03.2011**
(21) Numéro de dépôt: 06015572.8
(22) Date de dépôt: 26.07.2006
(51) Int. Cl.: F02M 25/07, F16K 11/052

(54) **Système pour le contrôle de la circulation de gaz, en particulier des gaz d'échappement d'un moteur**
System zur Steuerung eines Gaskreislaufs, insbesondere von Abgasen eines Motors
Control system for circulation of gas, in particular of exhaust gas of an engine

(30) Priorité: 29.07.2005 ES 200501938
(43) Date de publication de la demande: 31.01.2007
(73) Titulaire: Valeo Termico S.A., 50011 Zaragoza (ES)
(72) Inventeur: Bravo, Yolanda, 50007 Zaragoza (ES); Ruiz, Abel, 50008 Zaragoza (ES); Gracia, Benjamin, 50009 Zaragoza (ES)
(74) Mandataire: Rolland, Jean-Christophe

(56) Documents cités:
- EP-A- 1 363 013
- EP-A- 1 510 739
- EP-A1- 0 987 427
- EP-A1- 1 030 050
- WO-A2-03/085252
- WO-A2-2004/097192
- ES-A1- 2 247 899
- FR-A- 2 838 801
- JP-A- 2003 278 609
- US-A- 2 017 033

## Description

La présente invention concerne un système pour le contrôle de la circulation de gaz, en particulier des gaz d'échappement d'un moteur.

L'invention s'applique à des échangeurs thermiques constitués d'un faisceau de tubes parallèles ou d'un empilement de plaques, les deux types d'échangeur pouvant présenter une configuration linéaire, c'est-à-dire avec l'entrée et la sortie de gaz disposées aux extrémités opposées, ou bien une configuration en forme de « U », c'est-à-dire avec l'entrée et la sortie de gaz disposées côte à côte en une même extrémité de l'échangeur.

L'invention s'applique en particulier aux échangeurs de recirculation des gaz d'échappement d'un moteur (Exhaust Gas Recirculation Coolers ou EGRC), aux échangeurs de gaz d'échappement pour la régulation thermique de la ligne d'échappement des moteurs essence à injection directe (Exhaust Thermal Regulation ou ETR) et aux refroidisseurs de l'air de suralimentation ou intercoolers (Charge Air Coolers ou CAC).

### Contexte de l'invention

Une pratique bien établie dans le secteur de l'automobile consiste à fournir un système de recirculation des gaz d'échappement d'un moteur diesel, que l'on connaît sous le nom d'EGR ou « Exhaust Gas Recycling », afin de mélanger ces gaz avec l'air d'admission, puisque la présence des gaz d'échappement dans le mélange diminue la production d'oxydes d'azote (NOₓ).

Avant d'être mélangés avec l'air d'admission, les gaz d'échappement peuvent être refroidis dans un échangeur thermique (EGRC ou « Exhaust Gas Recycling Cooler ») installé dans la boucle du système EGR, afin d'améliorer l'efficacité du système.

Dans la boucle du système on trouve en outre une soupape (soupape EGR) qui contrôle le passage des gaz d'échappement à travers celui-ci.

L'échangeur thermique proprement dit peut avoir différentes configurations: par exemple, il peut consister en une carcasse tubulaire à l'intérieur de laquelle on dispose une série de tubes parallèles pour le passage des gaz, le réfrigérant circulant dans la carcasse à l'extérieur des tubes ; dans un autre mode de réalisation, l'échangeur se compose d'une série de plaques parallèles qui constituent les surfaces d'échange thermique, de façon à ce que les gaz d'échappement et le réfrigérant circulent entre deux plaques, en couches alternées.

Dans certains cas, les systèmes EGR refroidis présentent l'inconvénient que les gaz d'échappement circulent dans l'échangeur dans n'importe quelle condition de fonctionnement du moteur à partir du moment où s'ouvre la soupape EGR : les gaz sont refroidis aussi bien quand le moteur fonctionne en régime stable et que sa température est élevée que pendant un démarrage à froid, quand la température des gaz est beaucoup plus basse.

Ce refroidissement des gaz quand leur température n'est pas élevée représente un inconvénient du point de vue de l'environnement, puisqu'il augmente le niveau des émissions de CO et d'hydrocarbures et qu'en plus il implique une production de bruit.

Pour résoudre ce problème, on utilise au moins un conduit de dérivation, intégré à l'échangeur et apte à faire circuler les gaz d'échappement sans qu'ils subissent un refroidissement sensible. Le conduit de dérivation, que l'on peut désigner simplement par « by-pass », permet de réduire au minimum le refroidissement des gaz d'échappement dans certaines circonstances de fonctionnement du moteur, par exemple un démarrage à froid, dans lesquelles leur température n'est pas élevée et leur refroidissement serait préjudiciable pour l'émission de polluants.

Un tel échangeur avec "by-pass" est connu du document EP 1363013 A1, un autre du document EP 1030050 A1.

Par ailleurs, les échangeurs thermiques comprennent au moins un réservoir et/ou une bride ou connexion indépendante, au moyen de laquelle il est relié à la ligne de recirculation des gaz d'échappement. Généralement, lesdits échangeurs comprennent un réservoir d'entrée et un réservoir de sortie, lesdits réservoirs étant couplés respectivement aux conduits d'entrée et de sortie de la ligne de recirculation chacun au moyen d'une connexion indépendante.

Le système comprend aussi une soupape de régulation ou by-pass qui choisit le parcours des gaz d'échappement, à travers l'échangeur ou à travers le conduit de dérivation. Ladite soupape de régulation peut être située à l'entrée ou bien à la sortie de l'échangeur.

On connaît les soupapes qui constituent un composant séparé consistant en une carcasse et un obturateur (soupape papillon ou linéaire). Dans la plupart des cas, la carcasse est une pièce de fonderie et elle est vissée ou soudée à la carcasse de l'échangeur et au conduit by-pass. On connaît également les carcasses de soupape fabriquées par emboutissage et soudées à la carcasse de l'échangeur.

La demande de brevet espagnol n° 200 303 019, non encore publiée, par le même déposant que pour la présente invention, décrit un échangeur thermique qui comprend un conduit by-pass intégré à l'intérieur. En outre, il présente une différence significative avec les configurations susmentionnées en ce qu'il intègre la carcasse de la soupape comme partie de l'échangeur. L'obturateur de la soupape est assemblé à l'intérieur d'un corps principal et comprend à l'intérieur le palier de l'axe de la soupape papillon et les butées de rotation; à l'extérieur du corps de la soupape on trouve les moyens d'actionnement de celle-ci. La carcasse de la soupape est formée, dans ce cas, par une pièce du genre bride assemblée à la carcasse ou bien par une pièce emboutie avec un dessin semblable à celui d'un réservoir de gaz standard.

Il convient de souligner que ce type de soupape peut aussi être accouplé aux échangeurs thermiques à faisceau de tubes du type en forme de « U ».

Néanmoins, les systèmes décrits comportent des limitations dans le processus d'emboutissage. En outre, le dessin optimal, correspondant au conduit by-pass (en raison du moindre encombrement), doit comprendre une bride supplémentaire pour assembler le conduit by-pass et la carcasse de l'échangeur.

### Description de l'invention

L'objectif du système pour le contrôle de la circulation de gaz, en particulier des gaz d'échappement d'un moteur, selon la présente invention est de surmonter les inconvénients que présentent les systèmes connus dans l'art en fournissant une pièce de micro-fonderie qui permette l'intégration du réservoir, de la connexion, de la soupape de régulation et du conduit by-pass à l'échangeur lui-même, ce qui correspond à une réduction du nombre de composants ainsi qu'à une réduction de l'encombrement.

Le système pour le contrôle de la circulation de gaz, en particulier des gaz d'échappement d'un moteur, selon la présente invention est du genre qui comprend un échangeur thermique qui inclut un circuit destiné à la circulation des gaz avec échange thermique avec un fluide de refroidissement, un conduit by-pass apte à faire circuler les gaz sans qu'ils subissent un refroidissement sensible, une soupape de régulation pour le choix du circuit à travers lequel s'écoulent les gaz, un réservoir uni par soudure à l'entrée ou à la sortie de la carcasse de l'échangeur et une connexion pour assembler le réservoir à la ligne de recirculation de gaz d'échappement et se caractérise en ce que le réservoir intègre en un seul corps la connexion, les moyens d'assemblage à la carcasse de l'échangeur et des moyens de connexion avec le conduit by-pass, le corps comprenant une zone sensiblement plane pourvue d'une ouverture pour l'introduction et le montage de la soupape de régulation et ladite soupape comportant une plaque support pour la fixation de ladite soupape sur le corps au niveau de ladite zone plane.

De cette façon, l'intégration de ces composants en un corps unique permet une réduction du nombre de .pièces et de l'encombrement.

De préférence, ce corps est fabriqué par micro-fusion.

Le corps susvisé, fabriqué par micro-fusion, permet un assemblage adéquat respectivement avec la soupape, avec la carcasse de l'échangeur et avec la ligne de recirculation.

De même, la zone sensiblement plane du corps assure les exigences en matière de planéité et de rugosité nécessaires à un assemblage correct avec la soupape. Cet assemblage est critique car il détermine le fonctionnement correct de la soupape pour garantir que ne se produisent pas d'interférences avec le corps.

Selon un mode de réalisation de la présente invention, le conduit by-pass est extérieur à la carcasse de l'échangeur.

Dans ce cas, il est avantageux que les moyens de connexion avec le conduit by-pass comprennent un tronçon contigu uni au corps par soudure. C'est pourquoi il n'est pas nécessaire d'utiliser une bride supplémentaire pour assembler le conduit by-pass à la carcasse de l'échangeur, comme on le réalisait dans l'art antérieur.

Il est avantageux que le corps comprenne un tronçon d'entrée de gaz qui se divise en un premier cheminement pour le passage des gaz vers le conduit by-pass et un second cheminement pour le passage des gaz vers l'échangeur.

De préférence, le premier cheminement appartenant au tronçon contigu pour le passage des gaz vers le conduit by-pass est sensiblement courbe pour qu'on puisse placer ledit conduit by-pass extérieur tout près de la carcasse de l'échangeur. De plus, le dessin avec des adaptations courbes pour le conduit by-pass permet une compacité maximale qui assure une section transversale appropriée pour la chute de pression du gaz.

Il est avantageux que le corps soit fixé directement à la carcasse de l'échangeur et au conduit by-pass par soudure.

De préférence, la connexion du corps avec la ligne de recirculation de gaz d'échappement est constituée par une bride ou une connexion par collier. Le procédé de micro-fonderie permet de dessiner des configurations complexes pour la bride de connexion.

Il est avantageux que la soupape comprenne un obturateur, une plaque support pour la fixation sur le corps et des moyens d'actionnement de celle-ci.

De préférence, l'obturateur est une ailette tournante susceptible de fermer un des deux circuits de passage des gaz.

Conformément à un autre mode de réalisation de l'invention, l'échangeur est du type en forme de « U », comprenant une carcasse dont l'entrée et la sortie de gaz sont disposées côte à côte à une même.extrémité par laquelle il est accouplé au corps.

### Brève description des dessins

Afin de faciliter la description de tout ce qui a été exposé plus haut, on annexe quelques dessins dans lesquels, schématiquement et seulement à titre d'exemple non limitatif, on représente deux cas pratiques de mode de réalisation du système pour le contrôle de la circulation de gaz, en particulier des gaz d'échappement d'un moteur, selon la présente invention, parmi lesquels :
la figure 1 est une vue en perspective du système selon l'invention avant le montage de la soupape de régulation à l'intérieur du corps ;
la figure 2 est une vue en perspective de l'ensemble monté ;
la figure 3 est une vue de détail du corps de soupape et d'une partie de la soupape ;
la figure 4 est une vue en coupe du corps de soupape ;
la figure 5 est une vue en élévation de la soupape de régulation ; et
la figure 6 est une vue en perspective d'un corps de soupape adapté à un échangeur en forme de « U ».

### Description de modes de réalisation préférés

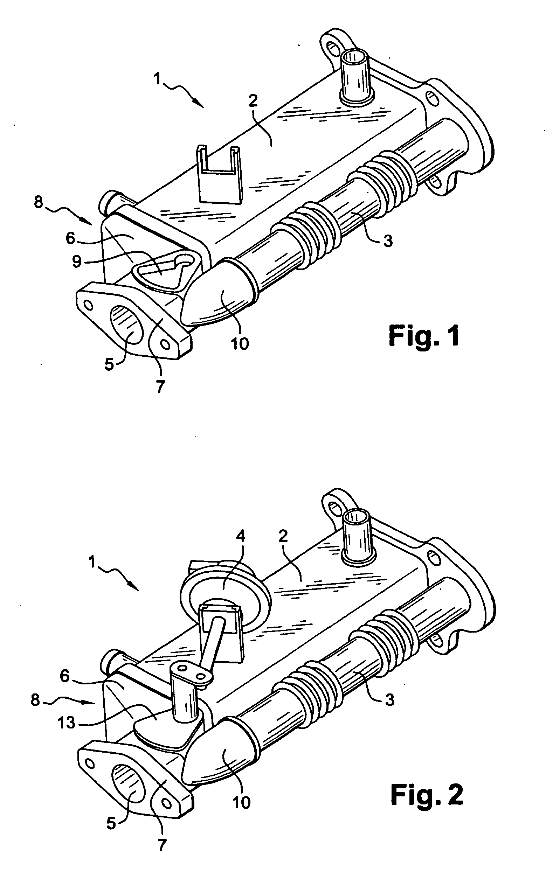

Un premier mode de réalisation préféré de la présente invention apparaît sur les figures 1 à 5.

Comme on peut s'en rendre compte sur les figures 1 à 5, le système pour le contrôle de la circulation de gaz comprend un échangeur thermique 1 de type EGR constitué d'une carcasse 2 qui contient deux circuits indépendants : un circuit destiné au passage des gaz à refroidir (faisceau de tubes parallèles ou plaques empilées) et un conduit by-pass 3 à l'extérieur de la carcasse 2 de l'échangeur.

Les deux circuits sont contrôlés par une soupape de régulation 4 pour le choix du circuit à travers lequel s'écoulent les gaz.

Les gaz à refroidir entrent dans l'échangeur 1 à partir d'un conduit d'alimentation 5 et à travers un réservoir d'entrée 6, lequel s'élargit progressivement et est accouplé à la carcasse 2 de l'échangeur 1. On prévoit aussi une connexion 7 pour unir le réservoir d'entrée 6 au conduit d'alimentation, qui peut être constituée par une bride ou une liaison par collier.

Le réservoir d'entrée 6 et la connexion 7 sont intégrés dans un corps unique 8 fabriqué par micro-fusion. En outre, ledit corps 8 comprend une zone sensiblement plane, pourvue d'une ouverture 9 pour l'introduction et l'accouplement de la soupape 4, et un tronçon contigu 10 pour la connexion avec le conduit by-pass 3 (Voir figures 1 à 3).

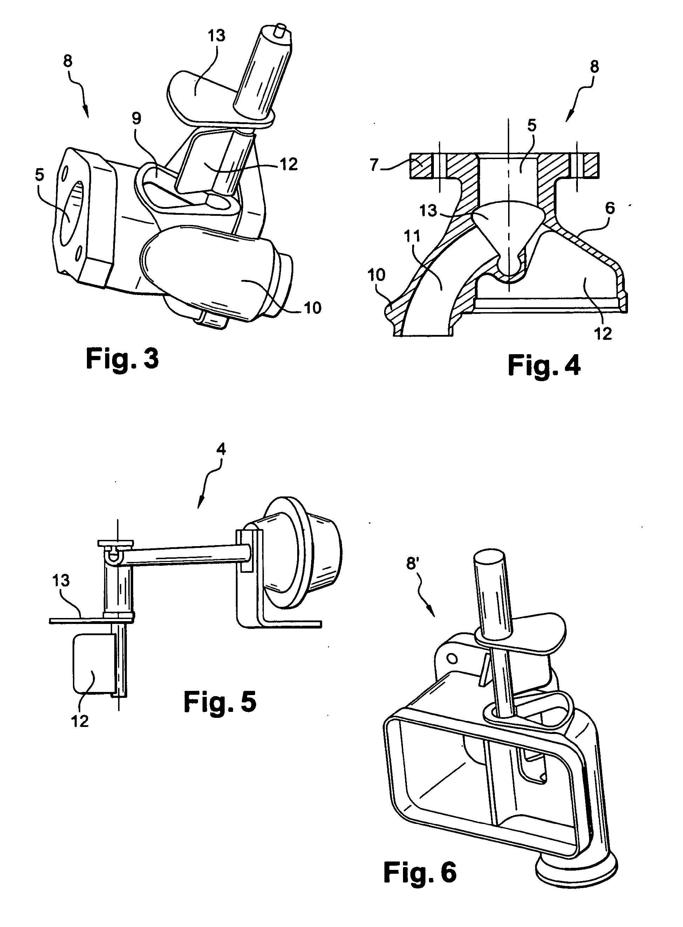

Comme on peut s'en rendre compte sur la figure 4, le corps 8 comprend un tronçon d'entrée de gaz qui se divise en un premier cheminement 11 pour le passage des gaz vers le conduit by-pass 3 et un second cheminement 12 pour le passage des gaz vers l'échangeur 1.

Le premier cheminement 11 appartenant au tronçon contigu 10 pour le passage des gaz vers le conduit by-pass 3 est sensiblement courbe pour placer ledit conduit by-pass 3 extérieur tout près de la carcasse 2 de l'échangeur 1, ce qui permet une compacité maximale qui assure une section transversale appropriée pour la chute de pression du gaz.

Si l'on se réfère à la figure 5, la soupape 4 comprend un obturateur 12, une plaque support 13 pour la fixation sur le corps 8 et des moyens d'actionnement de celle-là. Ledit obturateur 12 est constitué d'une ailette tournante susceptible de fermer un des deux circuits de passage des gaz.

La configuration dudit corps 8 assure un assemblage adéquat par soudure avec la soupape 4, le conduit by-pass 3, la carcasse 2 de l'échangeur et la ligne de recirculation. En outre, on obtient une réduction du nombre de composants ainsi qu'une réduction de l'encombrement.

Un second mode de réalisation est illustré sur la figure 6, qui montre un corps de soupape 8' convenant pour un échangeur en forme de « U ».

## Revendications

1. Système pour le contrôle de la circulation de gaz, en particulier des gaz d'échappement d'un moteur, qui comprend un échangeur thermique (1) qui inclut un circuit destiné à la circulation des gaz avec échange thermique avec un fluide de refroidissement, un conduit by-pass (3) apte à faire circuler les gaz sans qu'ils subissent un refroidissement sensible, une soupape de régulation (4) pour le choix du circuit à travers lequel s'écoulent les gaz, un réservoir (6) uni par soudure à l'entrée ou à la sortie de la carcasse (2) de l'échangeur (1) et une connexion (7) pour assembler le réservoir (6) à la ligne de recirculation de gaz d'échappement, le réservoir (6) intègrant en un seul corps (8, 8') la connexion (7), des moyens d'assemblage à la carcasse (2) de l'échangeur (1) et des moyens de connexion (10) avec le conduit by-pass (3) **caractérisé en ce que** le corps (8, 8') comprend une zone sensiblement plane pourvue d'une ouverture (9) pour l'introduction et le montage de la soupape de régulation (4) et **en ce que** ladite soupape comporte une plaque support (13) pour la fixation de ladite soupape sur le corps (8) au niveau de ladite zone plane.

2. Système selon la revendication 1, **caractérisé en ce que** le corps (8, 8') est fabriqué par micro-fusion.

3. Système selon l'une quelconque des revendications précédentes, **caractérisé en ce que** le conduit by-pass .(3) est extérieur à la carcasse (2) de l'échangeur (1).

4. Système selon la revendication précédente, **caractérisé en ce que** les moyens de connexion avec le conduit by-pass (3) comprennent un tronçon contigu (10) assemblé par soudure au corps (8).

5. Système selon la revendication précédente, **caractérisé en ce que** le corps (8) comprend un tronçon d'entrée de gaz qui se divise en un premier cheminement (11) pour le passage des gaz vers le conduit by-pass (3) et un second cheminement (12) pour le passage des gaz vers l'échangeur (1).

6. Système selon la revendication précédente, **caractérisé en ce que** le premier cheminement (11) appartenant au tronçon contigu (10) pour le passage des gaz vers le conduit by-pass (3) est sensiblement courbe pour placer ledit conduit by-pass (3) extérieur tout près de la carcasse (2) de l'échangeur (1).

7. Système selon l'une quelconque des revendications précédentes, **caractérisé en ce que** le corps (8) est fixé directement à la carcasse (2) de l'échangeur (1) et au conduit by-pass (3) par soudure.

8. Système selon l'une quelconque des revendications précédentes, **caractérisé en ce que** la connexion (7) du corps (8) avec la ligne de recirculation de gaz d'échappement est constituée par une bride ou une liaison par collier.

9. Système selon l'une quelconque des revendications précédentes, **caractérisé en ce que** la soupape (8) comprend en outre un obturateur (12) et des moyens d'actionnement de celle-là.

10. Système selon la revendication précédente, **caractérisé en ce que** l'obturateur (12) est une ailette tournante susceptible de fermer un des deux circuits de passage des gaz.

11. Système selon l'une quelconque des revendications 1 à 2, **caractérisé en ce qu'**il est du type en forme de «U», comprenant une carcasse dont l'entrée et la sortie de gaz sont disposées côte à côte à une même extrémité par laquelle il est accouplé au corps (8').

## Claims

1. System for controlling the circulation of gas, particularly exhaust gases from an engine, which comprises a heat exchanger (1) which includes a circuit intended for the circulation of the gases with exchange of heat with a coolant, a bypass duct (3) able to allow the gases to be circulated without them undergoing appreciable cooling, a regulating valve (4) for selecting which circuit the gases are to flow through, a reservoir (6) connected by brazing to the inlet or to the outlet of the shell (2) of the exchanger (1), and a connection (7) for assembling the reservoir (6) with the exhaust gas recirculation line, the reservoir (6) incorporating, within a single body (8, 8'), the connection (7), means of assembly with the shell (2) of the exchanger (1), and means of connection (10) with the bypass duct (3), **characterized in that** the body (8, 8') comprises a substantially flat zone provided with an opening (9) for introducing and fitting the regulating valve (4), and in the said valve comprises a mounting plate (13) for attaching the said valve to the body (8) in the said flat zone.

2. System according to Claim 1, **characterized in that** the body (8, 8') is manufactured by investment casting.

3. System according to any one of the preceding claims, **characterized in that** the bypass duct (3) is external to the shell (2) of the exchanger (1).

4. System according to the preceding claim, **characterized in that** the means of connection to the bypass duct (3) comprise a contiguous section (10) assembled with the body (8) by brazing.

5. System according to the preceding claim, **characterized in that** the body (8) comprises a gas inlet section which splits into a first path (11) for passing the gases towards the bypass duct (3) and a second path (12) for passing the gases towards the exchanger (1).

6. System according to the preceding claim, **characterized in that** the first path (11) belonging to the contiguous section (10) for passing the gases towards the bypass duct (3) is substantially curved so as to situate the said external bypass duct (3) very close to the shell (2) of the exchanger (1).

7. System according to any one of the preceding claims, **characterized in that** the body (8) is fixed directly to the shell (2) of the exchanger (1) and to the bypass duct (3) by brazing.

8. System according to any one of the preceding claims, **characterized in that** the connection (7) between the body (8) and the exhaust gas recirculation line consists of a flange or of a clamped connection.

9. System according to any one of the preceding claims, **characterized in that** the valve (8) further comprises a shutter (12) and means of actuating it.

10. System according to the preceding claim, **characterized in that** the shutter (12) is a rotary vane able to close one of the two of the gas circuits.

11. System according to either one of Claims 1 to 2, **characterized in that** it is of the U-shaped type comprising a shell in which the inlet and the outlet for the gas are positioned side by side at one and the same end via which it is coupled to the body (8').

## Patentansprüche

1. System zur Steuerung des Gaskreislaufs, insbesondere der Abgase eines Motors, das einen Wärmeaustauscher (1), der einen für den Durchfluss der Gase mit Wärmeaustausch mit einem Kühlmittel bestimmten Kreislauf umfasst, einen Bypass-Kanal (3), der die Gase strömen lassen kann, ohne dass sie eine spürbare Kühlung erfahren, ein Regelventil (4) für die Wahl des Kreislaufs, durch den die Gase strömen, einen Behälter (6), der durch Schweißverbindung mit dem Eingang oder dem Ausgang des Gehäuses (2) des Austauschers (1) verbunden ist, und einen Anschluss (7) enthält, um den Behälter (6) mit der Abgas-Rückführleitung zusammenzufügen, wobei der Behälter (6) in einem einzigen Körper (8, 8') den Anschluss (7), Einrichtungen zur Zusammenfügung mit dem Gehäuse (2) des Austauschers (1) und Anschlusseinrichtungen (10) an den Bypass-Kanal (3) umfasst, **dadurch gekennzeichnet, dass** der Körper (8, 8') eine im Wesentlichen ebene Zone enthält, die mit einer Öffnung (9) zur Einführung und Montage des Regelventils (4) versehen ist, und dass das Ventil eine Trägerplatte (13) zur Befestigung des Ventils am Körper (8) im Bereich der ebenen Zone aufweist.

2. System nach Anspruch 1, **dadurch gekennzeichnet, dass** der Körper (8, 8') durch Mikroschmelzen hergestellt wird.

3. System nach einem der vorhergehenden Ansprüche, **dadurch gekennzeichnet, dass** der Bypass-Kanal (3) sich außerhalb des Gehäuses (2) des Austauschers (1) befindet.

4. System nach dem vorhergehenden Anspruch, **dadurch gekennzeichnet, dass** die Anschlusseinrichtungen an dem Bypass-Kanal (3) einen angrenzenden Abschnitt (10) enthalten, der durch Schweißverbindung mit dem Körper (8) zusammengefügt wird.

5. System nach dem vorhergehenden Anspruch, **dadurch gekennzeichnet, dass** der Körper (8) einen Gaseintrittsabschnitt enthält, der in einen ersten Leitungskanal (11) für den Durchgang der Gase zum Bypass-Kanal (3) und in einen zweiten Leitungskanal (12) für den Durchgang der Gase zum Austauscher (1) aufgeteilt ist.

6. System nach dem vorhergehenden Anspruch, **dadurch gekennzeichnet, dass** der erste zum angrenzenden Abschnitt (10) gehörende Leitungskanal (11) für den Durchgang der Gase zum Bypass-Kanal (3) im Wesentlichen gekrümmt ist, um den äußeren Bypass-Kanal (3) ganz nahe am Gehäuse (2) des Austauschers (1) anzuordnen.

7. System nach einem der vorhergehenden Ansprüche, **dadurch gekennzeichnet, dass** der Körper (8) am Gehäuse (2) des Austauschers (1) und am Bypass-Kanal (3) direkt durch Schweißverbindung befestigt wird.

8. System nach einem der vorhergehenden Ansprüche, **dadurch gekennzeichnet, dass** der Anschluss (7) des Körpers (8) an die Abgas-Rückführleitung aus einem Flansch oder einer Schellenverbindung besteht.

9. System nach einem der vorhergehenden Ansprüche, **dadurch gekennzeichnet, dass** das Ventil (8) außerdem eine Verschlussvorrichtung (12) und Einrichtungen für deren Betätigung enthält.

10. System nach dem vorhergehenden Anspruch, **dadurch gekennzeichnet, dass** die Verschlussvorrichtung (12) ein Drehflügel ist, der einen der zwei Gasdurchgangskreisläufe schließen kann.

11. System nach einem der Ansprüche 1 bis 2, **dadurch gekennzeichnet, dass** es von der Art in Form eines "U" ist, das ein Gehäuse enthält, dessen Gaseingang und -ausgang nebeneinander am gleichen Ende angeordnet sind, über das es mit dem Körper (8') gekoppelt ist.
